# EUROPEAN PATENT APPLICATION

(11) **EP 3 557 383 A1**
(43) Date of publication of application: **23.10.2019**
(21) Application number: 19170235.6
(22) Date of filing: 18.04.2019
(51) Int. Cl.: G06F 3/01

(54) **HAPTIC-ENABLED WEARABLE DEVICE FOR GENERATING A HAPTIC EFFECT IN AN IMMERSIVE REALITY ENVIRONMENT**

(30) Priority: 20.04.2018 US 201815958881
(71) Applicant: Immersion Corporation, San Jose CA 95134 (US)
(72) Inventor: Rihn, William S., San Jose, CA95124 (US); Birnbaum, David M., Oakland, CA 94607 (US)
(74) Representative: Latscha Schöllhorn Partner AG

(57) **Abstract**

An apparatus, method, and non-transitory computer-readable medium are presented for providing haptic effects for an immersive reality environment. The method comprises receiving an indication that a haptic effect is to be generated for an immersive reality environment being generated by an immersive reality module. The method further comprises determining a type of immersive reality environment being generated by the immersive reality module, or a type of device on which the immersive reality module is being executed. The method further comprises controlling a haptic output device of a haptic-enabled wearable device to generate the haptic effect based on the type of immersive reality environment being generated by the immersive reality module, or the type of device on which the immersive reality module is being executed.

## Description

### FIELD OF THE INVENTION

The present invention is directed to a contextual haptic-enabled wearable device, and to a method and apparatus for providing a haptic effect in a context-dependent manner, and has application in gaming, consumer electronics, entertainment, and other situations.

### BACKGROUND

As virtual reality, augmented reality, mixed reality, and other immersive reality environments increase in usage for providing a user interface, haptic feedback has been implemented to augment a user's experience in such environments. Examples of such haptic feedback include kinesthetic haptic effects on a joystick or other gaming peripheral used to interact with the immersive reality environments.

### SUMMARY

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

One aspect of the embodiments herein relate to a processing unit or a non-transitory computer-readable medium having instructions stored thereon that, when executed by the processing unit, causes the processing unit to perform a method of providing haptic effects for an immersive reality environment. The method comprises receiving, by the processing circuit, an indication that a haptic effect is to be generated for an immersive reality environment being executed by an immersive reality module. The method further comprises determining, by the processing circuit, a type of immersive reality environment being generated by the immersive reality module, or a type of device on which the immersive reality module is being executed. In the method, the processing circuit controls a haptic output device of a haptic-enabled wearable device to generate the haptic effect based on the type of immersive reality environment being generated by the immersive reality module, or the type of device on which the immersive reality module is being executed.

In an embodiment, wherein the type of device on which the immersive reality module is being executed has no haptic generation capability.

In an embodiment, the type of the immersive reality environment is one of a two-dimensional (2D) environment, a three-dimensional (3D) environment, a mixed reality environment, a virtual reality (VR) environment, or an augmented reality (AR) environment.

In an embodiment, when the type of the immersive reality environment is a 3D environment, the processing circuit controls the haptic output device to generate the haptic effect based on a 3D coordinate of a hand of a user in a 3D coordinate system of the 3D environment, or based on a 3D gesture in the 3D environment.

In an embodiment, when the type of immersive reality environment is a 2D environment, the processing circuit controls the haptic output device to generate the haptic effect based on a 2D coordinate of a hand of a user in a 2D coordinate system of the 2D environment, or based on a 2D gesture in the 2D environment.

In an embodiment, when the type of immersive reality environment is an AR environment, the processing circuit controls the haptic output device to generate the haptic effect based on a simulated interaction between a virtual object of the AR environment and a physical environment depicted in the AR environment.

In an embodiment, the type of the immersive reality environment is determined to be a second type of immersive reality environment, and wherein the step of controlling the haptic output device to generate the haptic effect comprises retrieving a defined haptic effect characteristic associated with a first type of immersive reality environment, and modifying the defined haptic effect characteristic to generate a modified haptic effect characteristic, wherein the haptic effect is generated with the modified haptic effect characteristic.

In an embodiment, the defined haptic effect characteristic includes a haptic driving signal or a haptic parameter value, wherein the haptic parameter value includes at least one of a drive signal magnitude, a drive signal duration, or a drive signal frequency.

In an embodiment, the defined haptic effect characteristic includes at least one of a magnitude of vibration or deformation, a duration of vibration or deformation, a frequency of vibration or deformation, a coefficient of friction for an electrostatic friction effect or ultrasonic friction effect, or a temperature.

In an embodiment, the type of device on which the immersive reality module is being executed is one of a game console, a mobile phone, a tablet computer, a laptop, a desktop computer, a server, or a standalone a head-mounted display (HMD).

In an embodiment, wherein the type of the device on which the immersive reality module is being executed is determined to be a second type of device, and wherein the step of controlling the haptic output device to generate the haptic effect comprises retrieving a defined haptic effect characteristic associated with a first type of device for executing any immersive reality module, and modifying the defined haptic effect characteristic to generate a modified haptic effect characteristic, wherein the haptic effect is generated with the modified haptic effect characteristic.

In an embodiment, the processing unit further determines whether a user who is interacting with the immersive reality environment is holding a haptic-enabled handheld controller configured to provide electronic signal input for the immersive reality environment, wherein the haptic effect generated on the haptic-enabled wearable device is based on whether the user is holding a haptic-enabled handheld controller.

In an embodiment, the haptic effect is further based on what software other than the immersive reality module is being executed or is installed on the device.

In an embodiment, the haptic effect is further based on a haptic capability of the haptic output device of the haptic-enabled wearable device.

In an embodiment, the haptic output device is a second type of haptic output device, and wherein controlling the haptic output device comprises retrieving a defined haptic effect characteristic associated with a first type of haptic output device, and modifying the defined haptic effect characteristic to generate a modified haptic effect characteristic, wherein the haptic effect is generated based on the modified haptic effect characteristic.

One aspect of the embodiments herein relate to a processing unit, or a non-transitory computer-readable medium having instructions thereon that, when executed by the processing unit, causes the processing unit to perform a method of providing haptic effects for an immersive reality environment. The method comprises detecting, by the processing circuit, a simulated interaction between an immersive reality environment and a physical object being controlled by a user of the immersive reality environment. The method further comprises determining, by the processing circuit, that a haptic effect is to be generated for the simulated interaction between the immersive reality environment and the physical object. The method additionally comprises controlling, by the processing circuit, a haptic output device of a haptic-enabled wearable device to generate the haptic effect based on the simulated interaction between the physical object and the immersive reality environment.

In an embodiment, the physical object is a handheld object being moved by a user of the immersive reality environment.

In an embodiment, the handheld object is a handheld user input device configured to provide electronic signal input for the immersive reality environment.

In an embodiment, the handheld object has no ability to provide electronic signal input for the immersive reality environment.

In an embodiment, the simulated interaction includes simulated contact between the physical object and a virtual surface of the immersive reality environment, and wherein the haptic effect is based on a virtual texture of the virtual surface.

In an embodiment, the processing unit further determines a physical characteristic of the physical object, wherein the haptic effect is based on the physical characteristic of the physical object, and wherein the physical characteristic includes at least one of a size, color, or shape of the physical object.

In an embodiment, the processing unit further assigns a virtual characteristic to the physical object, wherein the haptic effect is based on the virtual characteristic, and wherein the virtual characteristic include at least one of a virtual mass, a virtual shape, a virtual texture, or a magnitude of virtual force between the physical object and a virtual object of the immersive reality environment.

In an embodiment, the haptic effect is based on a physical relationship between the haptic-enabled wearable device and the physical object.

In an embodiment, the haptic effect is based on proximity between the haptic-enabled wearable device and a virtual object of the immersive reality environment.

In an embodiment, the haptic effect is based on a movement characteristic of the physical object.

In an embodiment, the physical object includes a memory that stores profile information describing one or more characteristics of the physical object, wherein the haptic effect is based on the profile information.

In an embodiment, the immersive reality environment is generated by a device that is able to generate a plurality of different immersive reality environments. The processing unit further selects the immersive reality environment from among the plurality of immersive reality environments based on a physical or virtual characteristic of the physical object.

In an embodiment, the processing unit further applies an image classification algorithm to a physical appearance of the physical object to determine an image classification of the physical object, wherein selecting the immersive reality environment from among the plurality of immersive reality environments is based on the image classification of the physical object.

In an embodiment, the physical object includes a memory that stores profile information describing a characteristic of the physical object, wherein selecting the immersive reality environment from among the plurality of immersive reality environments is based on the profile information stored in the memory.

One aspect of the embodiments herein relate to a processing unit, or a non-transitory computer-readable medium having instructions thereon that, when executed by the processing unit, causes the processing unit to perform a method of providing haptic effects for an immersive reality environment. The method comprises determining, by a processing circuit, that a haptic effect is to be generated for an immersive reality environment. The method further comprises determining, by the processing circuit, that the haptic effect is a defined haptic effect associated with a first type of haptic output device. In the method, the processing unit determines a haptic capability of a haptic-enabled device in communication with the processing circuit, wherein the haptic capability indicates that the haptic-enabled device has a haptic output device that is a second type of haptic output device. In the method, the processing unit further modifies a haptic effect characteristic of the defined haptic effect based on the haptic capability of the haptic-enabled device in order to generate a modified haptic effect with a modified haptic effect characteristic.

In an embodiment, the haptic capability of the haptic-enabled device indicates at least one of what type(s) of haptic output device are in the haptic-enabled device, how many haptic output devices are in the haptic-enabled device, what type(s) of haptic effect each of the haptic output device(s) is able to generate, a maximum haptic magnitude that each of the haptic output device(s) is able to generate, a frequency bandwidth for each of the haptic output device(s), a minimum ramp-up time or brake time for each of the haptic output device(s), a maximum temperature or minimum temperature for any thermal haptic output device of the haptic-enabled device, or a maximum coefficient of friction for any ESF or USF haptic output device of the haptic-enabled device.

In an embodiment, modifying the haptic effect characteristic includes modifying at least one of a haptic magnitude, haptic effect type, haptic effect frequency, temperature, or coefficient of friction.

One aspect of the embodiments herein relate to a processing unit, or a non-transitory computer-readable medium having instructions thereon that, when executed by the processing unit, causes the processing unit to perform a method of providing haptic effects for an immersive reality environment. The method comprises determining, by a processing circuit, that a haptic effect is to be generated for an immersive reality environment being generated by the processing circuit. The method further comprises determining, by the processing circuit, respective haptic capabilities for a plurality of haptic-enabled devices in communication with the processing circuit. In the method, the processing unit selects a haptic-enabled device from the plurality of haptic-enabled devices based on the respective haptic capabilities of the plurality of haptic-enabled devices. The method further comprises controlling the haptic-enabled device that is selected to generate the haptic effect, such that no unselected haptic-enabled device generates the haptic effect.

One aspect of the embodiments herein relate to a processing unit, or a non-transitory computer-readable medium having instructions thereon that, when executed by the processing unit, causes the processing unit to perform a method of providing haptic effects for an immersive reality environment. The method comprises tracking, by a processing circuit, a location or movement of a haptic-enabled ring or haptic-enabled glove worn by a user of an immersive reality environment. The method further comprises determining, based on the location or movement of the haptic-enabled ring or haptic-enabled glove, an interaction between the user and the immersive reality environment. In the method, the processing unit controls the haptic-enabled ring or haptic-enabled glove to generate a haptic effect based on the interaction that is determined between the user and the immersive reality environment.

In an embodiment, the haptic effect is based on a relationship, such as proximity, between the haptic-enabled ring or haptic-enabled glove and a virtual object of the immersive reality environment.

In an embodiment, the relationship indicates proximity between the haptic-enabled ring or haptic-enabled glove and a virtual object of the immersive reality environment

In an embodiment, the haptic effect is based on a virtual texture or virtual hardness of the virtual object.

In an embodiment, the haptic effect is triggered in response to the haptic-enabled ring or the haptic-enabled glove crossing a virtual surface or virtual boundary of the immersive reality environment, and wherein the haptic effect is a micro-deformation effect that approximates a kinesthetic effect.

In an embodiment, tracking the location or movement of the haptic-enabled ring or the haptic-enabled glove comprises the processing circuit receiving from a camera an image of a physical environment in which the user is located, and applying an image detection algorithm to the image to detect the haptic-enabled ring or haptic-enabled glove.

One aspect of the embodiments herein relate to a system comprising an immersive reality generating device and a haptic-enabled wearable device. The immersive reality generating device has a memory configured to store an immersive reality module for generating an immersive reality environment; a processing unit configured to execute the immersive reality module, and a communication interface for performing wireless communication, wherein the immersive reality generating device has no haptic output device and no haptic generation capability. The haptic-enabled wearable device has a haptic output device, a communication interface configured to wirelessly communicate with the communication interface of the immersive reality generating device, wherein the haptic-enabled wearable device is configured to receive, from the immersive reality generating device, an indication that a haptic effect is to be generated, and to control the haptic output device to generate the haptic effect.

### BRIEF DESCRIPTION OF THE DRAWINGS

The foregoing and other features, objects and advantages of the invention will be apparent from the following detailed description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIGS. 1A-1E depict various systems for generating a haptic effect based on a context of a user interaction with an immersive reality environment, according to embodiments hereof.
FIGS. 2A-2D depict aspects for generating a haptic effect based on a type of immersive reality environment being generated, or a type of device on which an immersive reality module is being executed, according to embodiments hereof
FIG. 3 depicts an example method for generating a haptic effect based on a type of immersive reality environment being generated, or a type of device on which an immersive reality module is being executed, according to embodiments hereof.
FIGS. 4A-4E depict aspects for generating a haptic effect based on interaction between a physical object and an immersive reality environment, according to embodiments hereof.
FIG. 5 depicts an example method for generating a haptic effect based on interaction between a physical object and an immersive reality environment, according to an embodiment hereof.
FIGS. 6A and 6B depict aspects for generating a haptic effect based on a haptic capability of a haptic-enabled device, according to an embodiment hereof.
FIG. 7 depicts an example method for determining user interaction with an immersive reality environment by tracking a location or movement of a haptic-enabled wearable device, according to an embodiment hereof.

### DETAILED DESCRIPTION

The following detailed description is merely exemplary in nature and is not intended to limit the invention or the application and uses of the invention. Furthermore, there is no intention to be bound by any expressed or implied theory presented in the preceding technical field, background, brief summary or the following detailed description.

One aspect of the embodiments herein relates to providing a haptic effect for an immersive reality environment, such as a virtual reality environment, an augmented reality environment, or a mixed reality environment, in a context-dependent manner. In some cases, the haptic effect may be based on a context of a user's interaction with the immersive reality environment. One aspect of the embodiments herein relates to providing the haptic effect with a haptic-enabled wearable device, such as a haptic-enabled ring worn on a user's hand. In some cases, the haptic-enabled wearable device may be used in conjunction with an immersive reality platform (also referred to as an immersive reality generating device) that has no haptic generating capability. For instance, the immersive reality platform has no built-in haptic actuator. Such cases allow the immersive reality platform, such as a mobile phone, to have a slimmer profile and/or less weight. When the mobile phone needs to provide a haptic alert to a user, the mobile phone may provide an indication to the haptic-enabled wearable device that a haptic effect needs to be generated, and the haptic-enabled wearable device may generate the haptic effect. The haptic-enabled wearable device may thus provide a common haptic interface for different immersive reality environments or different immersive reality platforms. The haptic alert generated by the haptic-enabled wearable device may relate to user interaction with an immersive reality environment, or may relate to other situations, such as a haptic alert regarding an incoming phone call or text message being received by the mobile phone. One aspect of the embodiments herein relates to using the haptic-enabled wearable device, such as the haptic-enabled ring, to track a location or movement of a hand of a user, so as to track a gesture or other form of interaction by the user with an immersive reality environment.

As stated above, one aspect of the embodiments herein relates to generating a haptic effect based on a context of a user's interaction with an immersive reality environment. In some cases, the context may refer to what type of immersive reality environment the user is interacting with. For instance, the type of immersive reality environment may be one of a virtual reality (VR) environment, an augmented reality (AR) environment, a mixed reality (MR) environment, a 3D environment, a 2D environment, or any combination thereof. The haptic effect that is generated may differ based on the type of immersive reality environment that the user is interacting in. For example, a haptic effect for a 2D environment may be based on a 2D coordinate of a hand of a user, or motion of a hand of a user, along two coordinate axes of the 2D environment, while a haptic effect for a 3D environment may be based on a 3D coordinate of a hand of the user, or motion of a hand of a user, along three coordinate axes of the 3D environment.

In some instances, a context-dependent haptic effect functionality may be implemented as a haptic control module that is separate from an immersive reality module for providing an immersive reality environment. Such an implementation may allow a programmer to create an immersive reality module (also referred to as immersive reality application) without having to program context-specific haptic effects into the immersive reality module. Rather, the immersive reality module may later incorporate the haptic control module (e.g., as a plug-in) or communicate with the haptic control module to ensure that haptic effects are generated in a context-dependent manner. If an immersive reality module is programmed with, e.g., a generic haptic effect characteristic that is not context-specific or specific to only one context, the haptic control module may modify the haptic effect characteristic to be specific to other, different contexts. In some situations, an immersive reality module may be programmed without instructions for specifically triggering a haptic effect or without haptic functionality in general. In such situations, the haptic control module may monitor events occurring within an immersive reality environment and determine when a haptic effect is to be generated.

Regarding context-dependent haptic effects, in some cases a context may refer to a type of device on which the immersive reality module (which may also be referred to as an immersive reality application) is being executed. The type of device may be, e.g., a mobile phone, a tablet computer, a laptop computer, a desktop computer, a server, or a standalone head-mounted display (HMD). The standalone HMD may have its own display and processing capability, such that it does not need another device, such as a mobile phone, to generate an immersive reality environment. In some cases, an immersive reality module for each type of device may have a defined haptic effect characteristic (which may also be referred to as a pre-defined haptic effect characteristic) that is specific to that type of device. For instance, an immersive reality module being executed on a tablet computer may have been programmed with a haptic effect characteristic that is specific to tablet computers. If a haptic effect is to be generated on a haptic-enabled wearable device, a pre-existing haptic effect characteristic may have to be modified by a haptic control module in accordance herewith so as to be suitable for the haptic-enabled wearable device. A haptic control module in accordance herewith may need to make a modification of the haptic effect based on what type of device an immersive reality module is executing on.

In an embodiment, a context may refer to what software is being executed or installed on a device executing an immersive reality module (the device may be referred to as an immersive reality generating device, or an immersive reality platform). The software may refer to the immersive reality module itself, or to other software on the immersive reality platform. For instance, a context may refer to an identity of the immersive reality module, such as its name and version, or to a type of immersive reality module (e.g., a first-person shooting game). In another example, a context may refer to what operating system (e.g., Android™, Mac OS®, or Windows®) or other software is running on the immersive reality platform. In an embodiment, a context may refer to what hardware component is on the immersive reality platform. The hardware component may refer to, e.g., a processing circuit, a haptic output device (if any), a memory, or any other hardware component.

In an embodiment, a context of a user's interaction with an immersive reality environment may refer to whether a user is using a handheld gaming peripheral such as a handheld game controller to interact with the immersive reality environment, or whether the user is interacting with the immersive reality environment with only his or her hand and any haptic-enabled wearable device worn on the hand. The handheld game controller may be, e.g., a game controller such as the Oculus Razer® or a wand such as the Wii® remote device. For instance, a haptic effect on a haptic-enabled wearable device may be generated with a stronger drive signal magnitude if a user is not holding a handheld game controller, relative to a drive signal magnitude for when a user is holding a handheld game controller. In one example, a context may further refer to a haptic capability (if any) of a handheld game controller.

In an embodiment, a context may refer to whether and how a user is using a physical object to interact with an immersive reality environment. The physical object may be an everyday object that is not an electronic game controller and has no capability for providing electronic signal input for an immersive reality environment. For instance, the physical object may be a toy car that a user picks up to interact with a virtual race track of an immersive reality environment. The haptic effect may be based on presence of the physical object, and/or how the physical object is interacting with the immersive reality environment. In an embodiment, a haptic effect may be based on a physical characteristic of a physical object, and/or a virtual characteristic assigned to a physical object. In an embodiment, a haptic effect may be based on a relationship between a physical object and a haptic-enabled wearable device, and/or a relationship between a physical object and a virtual object of an immersive reality environment.

In an embodiment, a physical object may be used to select which immersive reality environment of a plurality of immersive reality environments is to be generated on an immersive reality platform. The selection may be based on, e.g., a physical appearance (e.g., size, color, shape) of the physical object. For instance, if a user picks up a physical object that is a Hot Wheels® toy, an immersive reality platform may use an image classification algorithm to classify a physical appearance of the physical object as that of a car. As a result, an immersive reality environment related to cars may be selected to be generated. The selection does not have to rely on only image classification, or does not have to rely on image classification at all. For instance, a physical object may in some examples have a memory that stores a profile that indicates characteristics of the physical object. The characteristics in the profile may, e.g., identify a classification of the physical object as a toy car.

In an embodiment, a context may refer to which haptic-enabled devices are available to generate a haptic effect for an immersive reality environment, and/or capabilities of the haptic-enabled devices. The haptic-enabled devices may be wearable devices, or other types of haptic-enabled devices. In some instances, a particular haptic-enabled device may be selected from among a plurality of haptic-enabled devices based on a haptic capability of a selected device. In some instances, a haptic effect characteristic may be modified so as to be better suited to a haptic capability of a selected device.

In an embodiment, a haptic-enabled wearable device may be used to perform hand tracking in an immersive reality environment. For instance, an image recognition algorithm may detect a location, orientation, or movement of a haptic-enabled ring or haptic-enabled glove, and use that location, orientation, or movement of the haptic-enabled wearable device to determine, or as a proxy for, a location, orientation, or movement of a hand of a user. The haptic-enabled wearable device may thus be used to determine interaction between a user and an immersive reality environment.

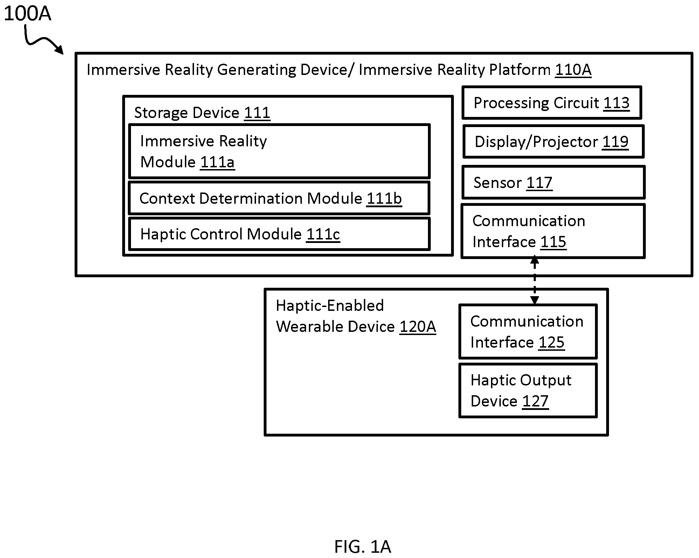

FIGS. 1A-1E illustrate respective systems 100A-100E for generating a haptic effect for an immersive reality environment, such as a VR environment, AR environment, or mixed reality environment, in a context-dependent manner. More specifically, FIG. 1A depicts a system 100A that includes an immersive reality generating device 110A (also referred to as an immersive reality platform) and a haptic-enabled wearable device 120A. In an embodiment, the immersive reality generating device 110A may be a device configured to execute an immersive reality module (also referred to as an immersive reality application). The immersive reality generating device 110A may be, e.g., a mobile phone, tablet computer, laptop computer, desktop computer, a server, a standalone HMD, or any other device configured to execute computer-readable instructions for generating an immersive reality environment. The standalone HMD device may have its own processing and display (or, more generally, rendering) capability for generating an immersive reality environment. In some instances, if the immersive reality generating device 110A is a mobile phone, it may be docked with a HMD shell, such as the Samsung® Gear™ VR headset or the Google® Daydream™ View VR headset, to generate an immersive reality environment.

In an embodiment, the immersive reality generating device 110A may have no haptic generation capability. For instance, the immersive reality generating device 110A may be a mobile phone that has no haptic output device. The omission of the haptic output device may allow the mobile phone to have a reduced thickness, reduced weight, and/or longer battery life. Thus, some embodiments herein relate to a combination of an immersive reality generating device and a haptic-enabled wearable device in which the immersive reality generating device has no haptic generation capability and relies on the haptic-enabled wearable device to generate a haptic effect.

In FIG. 1A, the immersive reality generating device 110A may include a storage device 111, a processing circuit 113, a display/projector 119, a sensor 117, and a communication interface 115. The storage device 111 may be a non-transitory computer-readable medium that is able to store one or more modules, wherein each of the one or more modules includes instructions that are executable by the processing circuit 113. In one example, the one or more modules may include an immersive reality module 111a, a context determination module 111b, and a haptic control module 111c. The storage device 111 may include, e.g., computer memory, a solid state drive, a flash drive, a hard drive, or any other storage device. The processing circuit 113 may include one or more microprocessors, one or more processing cores, a programmable logic array (PLA), a field programmable gate array (FPGA), an application specific integrated circuit (ASIC), or any other processing circuit.

In FIG. 1A, the immersive reality environment is rendered (e.g., displayed) on a display/projector 119. For instance, if the immersive reality generating device 110A is a mobile phone docked with an HMD shell, the display/projector 119 may be a LCD display or OLED display of the mobile phone that is able to display an immersive reality environment, such as an augmented reality environment. For some augmented reality applications, the mobile phone may display an augmented reality environment while a user is wearing the HMD shell. For some augmented reality applications, the mobile phone can display an augmented reality environment without any HMD shell. In an embodiment, the display/projector 119 may be configured as an image projector configured to project an image representing an immersive reality environment, and/or a holographic projector configured to project a hologram representing an immersive reality environment. In an embodiment, the display/projector 119 may include a component that is configured to directly provide voltage signals to an optic nerve or other neurological structure of a user to convey an image of the immersive reality environment to the user. The image, holographic projection, or voltage signals may be generated by the immersive reality module 111a (also referred to as immersive reality application).

In the embodiment of FIG. 1A, a functionality for determining a context of a user's interaction and for controlling a haptic effect may be implemented on the immersive reality generating device 110A, via the context determination module 111b and the haptic control module 111c, respectively. The modules 111b, 111c may be provided as, e.g., standalone applications or programmed circuits that communicate with the immersive reality module 111a, plug-ins, drivers, static or dynamic libraries, or operating system components that are installed by or otherwise incorporated into the immersive reality module 111a, or some other form of modules. In an embodiment, two or more of the modules 111a, 111b, 111c may be part of a single software package, such as a single application, plug-in, library, or driver.

In some cases, the immersive reality generating device 110A further includes a sensor 117 that captures information from which the context is determined. In an embodiment, the sensor 117 may include a camera, an infrared detector, an ultrasound detection sensor, a hall sensor, a lidar or other laser-based sensor, radar, or any combination thereof. If the sensor 117 is an infrared detector, the system 100A may include, e.g., a set of stationary infrared emitters (e.g., infrared LED's) that are used to track user movement within an immersive reality environment. In an embodiment, the sensor 117 may be part of a simultaneous localization and mapping (SLAM) system. In an embodiment, the sensor 117 may include a device that is configured to generate an electromagnetic field and detect movement within the field due to changes in the field. In an embodiment, the sensor may include devices configured to transmit wireless signals to determine position or movement via triangulation. In an embodiment, the sensor 117 may include an inertial sensor, such as an accelerometer, gyroscope, or any combination thereof. In an embodiment, the sensor 117 may include a global positioning system (GPS) sensor. In an embodiment, haptic-enabled wearable device 120A, such as a haptic-enabled ring, may include a camera or other sensor for the determination of context information.

In an embodiment, the context determination module 111b may be configured to determine context based on data from the sensor 117. For instance, the context determination module 111b may be configured to apply a convolutional neural network or other machine learning algorithm, or more generally an image processing algorithm, to a camera image or other data from the sensor 117. The image processing algorithm may, for instance, detect presence of a physical object, as described above, and/or determine a classification of a physical appearance of a physical object. In another example, the image processing algorithm may detect a location of a haptic-enabled device worn on a user's hand, or directly of the user's hand, in order to perform hand tracking or hand gesture recognition. In an embodiment, the context determination module 111b may be configured to communicate with the immersive reality module 111a and/or an operating system of the device 110A in order to determine, e.g., a type of immersive reality environment being executed by the immersive reality module 111a, or a type of device 110A on which the immersive reality module 111a is being executed.

In an embodiment, the haptic control module 111c may be configured to control a manner in which to generate a haptic effect, and to do so based on, e.g., a context of a user's interaction with the immersive reality environment. In the embodiment of FIG. 1A, the haptic control module 111c may be executed on the immersive reality generating device 110A. The haptic control module 111c may be configured to control a haptic output device 127 of the haptic-enabled wearable device 120A, such as by sending a haptic command to the haptic output device 127 via the communication interface 115. The haptic command may include, e.g., a haptic driving signal or haptic effect characteristic for a haptic effect to be generated.

As illustrated in FIG. 1A, the haptic-enabled wearable device 120A may include a communication interface 125 and the haptic output device 127. The communication interface 125 of the haptic-enabled wearable device 120A may be configured to communicate with the communication interface 115 of the immersive reality generating device 110A. In some instances, the communication interfaces 115, 125 may support a protocol for wireless communication, such as communication over an IEEE 802.11 protocol, a Bluetooth® protocol, near-field communication (NFC) protocol, or any other protocol for wireless communication. In some instances, the communication interfaces 115, 125 may even support a protocol for wired communication. In an embodiment, the immersive reality generating device 110A and the haptic-enabled wearable device 120A may be configured to communicate over a network, such as the Internet.

In an embodiment, the haptic-enabled wearable device 120A may be a type of body-grounded haptic-enabled device. In an embodiment, the haptic-enabled wearable device 120A may be a device worn on a user's hand or wrist, such as a haptic-enabled ring, haptic-enabled glove, haptic-enabled watch or wrist band, or a fingernail attachment. Haptic-enabled rings are discussed in more detail in U.S. Patent Appl. No. _ (IMM753), titled "Haptic Ring," the entire content of which is incorporated by reference herein in its entirety. In an embodiment, the haptic-enabled wearable device 120A may be a head band, a gaming vest, a leg strap, an arm strap, a HMD, a contact lens, or any other haptic-enabled wearable device.

In an embodiment, the haptic output device 127 may be configured to generate a haptic effect in response to a haptic command. In some instances, the haptic output device 127 may be the only haptic output device on the haptic-enabled wearable device 120A, or may be one of a plurality of haptic output devices on the haptic-enabled wearable device 120A. In some cases, the haptic output device 127 may be an actuator configured to output a vibrotactile haptic effect. For instance, the haptic output device 127 may be an eccentric rotating motor (ERM) actuator, a linear resonant actuator (LRA), a solenoid resonant actuator (SRA), an electromagnet actuator, a piezoelectric actuator, a macro-fiber composite (MFC) actuator, or any other vibrotactile haptic actuator. In some cases, the haptic output device 127 may be configured to generate a deformation haptic. For instance, the haptic output device 127 may use a smart material such as an electroactive polymer (EAP), a macro-fiber composite (MFC) piezoelectric material (e.g., a MFC ring), a shape memory alloy (SMA), a shape memory polymer (SMP), or any other material that is configured to deform when a voltage, heat, or other stimulus is applied to the material. The deformation effect may be created in any other manner. In an embodiment, the deformation effect may squeeze, e.g., a user's finger, and may be referred to as a squeeze effect. In some cases, the haptic output device 127 may be configured to generate an electrostatic friction (ESF) haptic effect or an ultrasonic friction (USF) effect. In such cases, the haptic output device 127 may include one or more electrodes, which may be exposed on a surface of the haptic-enabled wearable device 120A or may be slightly electrically insulated beneath the surface, and include a signal generator for applying a signal onto the one or more electrodes. In some cases, the haptic output device 127 may be configured to generate a temperature-based haptic effect. For instance, the haptic output device 127 may be a Peltier device configured to generate a heating effect or a cooling effect. In some cases, the haptic output device may be, e.g., an ultrasonic device that is configured to project air toward a user.

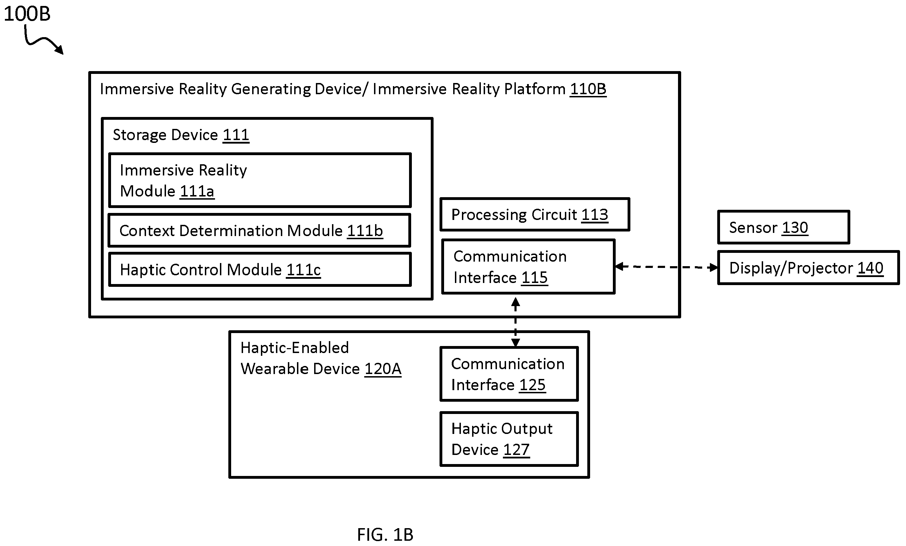

In an embodiment, one or more components of the immersive reality generating device 110A may be supplemented with or replaced by an external component. For instance, FIG. 1B illustrates a system 100B having an immersive reality generating device 110B that relies on an external sensor 130 and an external display/projector 140. For instance, the external sensor 130 may be an external camera, pressure mat, or infrared proximity sensor, while the external display/projector 140 may be a holographic projector, HMD, or contact lens. The devices 130, 140 may be in communication with the immersive reality generating device 110B, which may be, e.g., a desktop computer or server. More specifically, the immersive reality generating device 110B may receive sensor data from the sensor 130 to be used in the context determination module 111b, and may transmit image data that is generated by the immersive reality module 111a to the display/projector 140.

In FIGS. 1A and 1B, the context determination module 111b and the haptic control module 111c may both be executed on the immersive reality generating device 110A or 110B. For instance, while the immersive reality module 111a is generating an immersive reality environment, the context determination module 111b may determine a context of user interaction. Further, the haptic control module 111c may receive an indication from the immersive reality module 111a that a haptic effect should be generated. The indication may include, e.g., a haptic command or an indication that a particular event within the immersive reality environment has occurred, wherein the haptic control module 111c is configured to trigger the haptic effect in response to the event. The haptic control module 111c may then generate its own haptic command and communicate the haptic command to the haptic-enabled wearable device 120A, which performs the haptic command from the haptic control module 111c by causing the haptic output device 127 to generate a haptic effect based on the haptic command. The haptic command may include, e.g., a haptic driving signal and/or a haptic effect characteristic, which is discussed in more detail below.

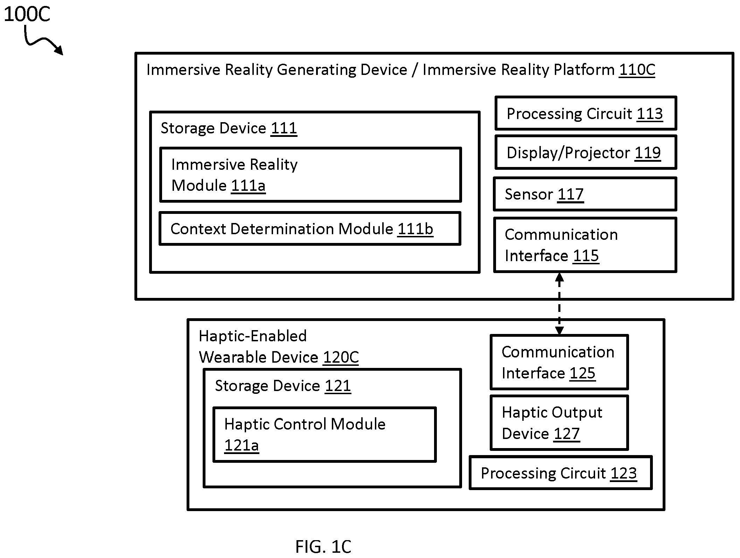

In an embodiment, the haptic control functionality may reside at least partially in a haptic-enabled wearable device. For instance, FIG. 1C illustrates a system 100C in which a haptic-enabled wearable device 120C includes a storage device 121 that stores a haptic control module 121a, and includes a processing circuit 123 for executing the haptic control module 121a. The haptic control module 121a may be configured to communicate with an immersive reality generating device 110C in order to determine a context of user interaction. The context may be determined with the context determination module 111b, which in this embodiment is executing on the immersive reality generating device 110C. The haptic control module 121a may determine a haptic effect to generate based on the determined context, and may control the haptic output device 127 to generate the haptic effect that is determined. In FIG. 1C, the immersive reality generating device 110C may omit a haptic control module, such that the functionality for determining a haptic effect is implemented entirely on the haptic-enabled wearable device 120C. In another embodiment, the immersive reality generating device 110C may still execute the haptic control module 111c, as described in the prior embodiments, such that the functionality for determining the haptic effect is implemented together by the immersive reality generating device 110C and the haptic-enabled wearable device 120C.

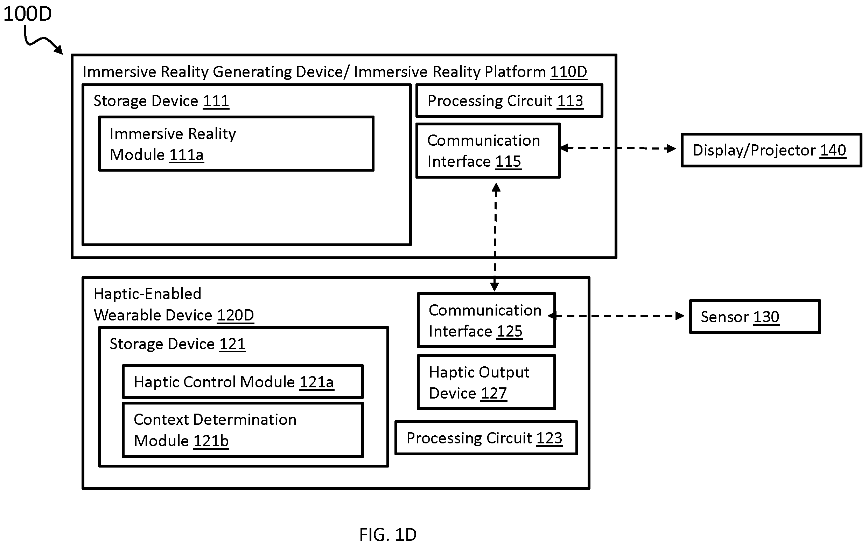

In an embodiment, the context determination functionality may reside at least partially on a haptic-enabled wearable device. For instance, FIG. 1D illustrates a system 100D that includes a haptic-enabled wearable device 120D that includes both the haptic control module 121a and a context determination module 121b. The haptic-enabled wearable device 120D may be configured to receive sensor data from a sensor 130, and the context determination module 121b may be configured to use the sensor data to determine a context of user interaction. When the haptic-enabled wearable device 120D receives an indication from the immersive reality module 111a of the immersive reality generating device 110D that a haptic effect is to be generated, the haptic control module 121a may be configured to control the haptic output device 127 to generate a haptic effect based on the context of user interaction. In some cases, the context determination module 121b may communicate a determined context to the immersive reality module 111a.

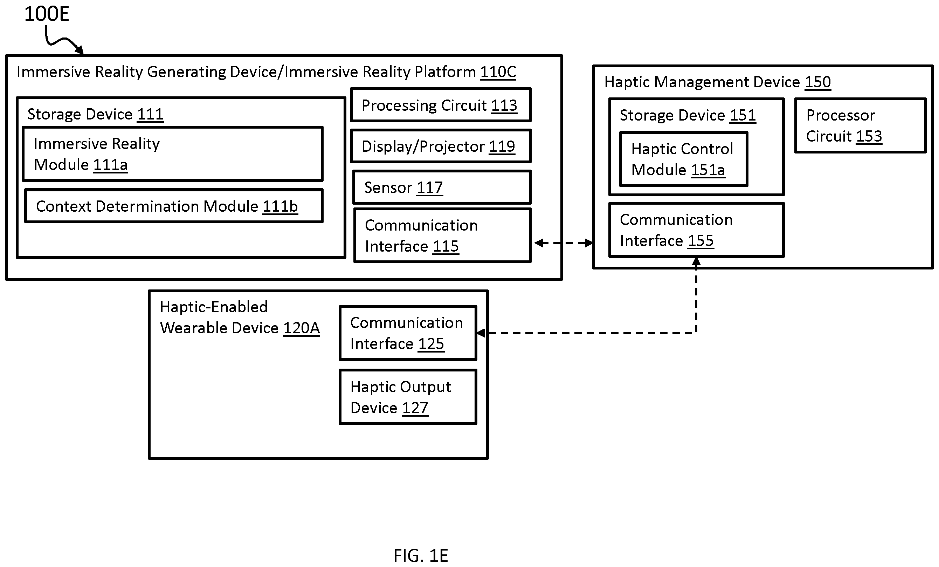

In an embodiment, the functionality of a haptic control module may be implemented on a device that is external to both an immersive reality generating device and to a haptic-enabled wearable device. For instance, FIG. 1E illustrates a system 100E that includes a haptic management device 150 that is external to an immersive reality generating device 110C and to a haptic-enabled wearable device 120A. The haptic management device 150 may include a storage device 151, a processing circuit 153, and a communication interface 155. The processing circuit 153 may be configured to execute a haptic control module 151a stored on the storage device 151. The haptic control module 151a may be configured to receive an indication from the immersive reality generating device 110C that a haptic effect needs to be generated for an immersive reality environment, and receive an indication of a context of user interaction with the immersive reality environment. The haptic control module 151a may be configured to generate a haptic command based on the context of user interaction, and to communicate the haptic command to the haptic-enabled wearable device 120A. The haptic-enabled wearable device 120A may then be configured to generate a haptic effect based on the context of user interaction.

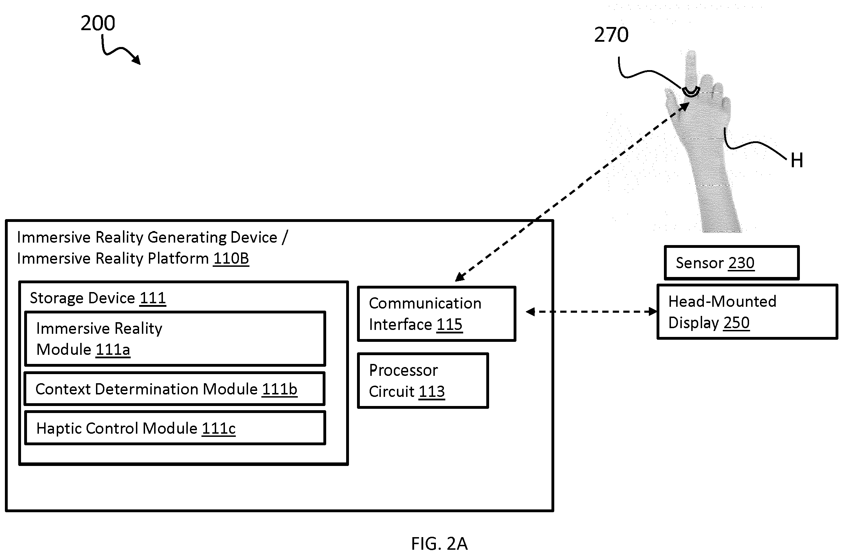

As stated above, in some cases a context of a user's interaction with an immersive reality environment may refer to a type of immersive reality environment being generated, or a type of immersive reality generating device on which the immersive reality environment is being generated. FIGS. 2A-2D depict a system 200 for generating a haptic effect based on a type of immersive reality environment being generated by an immersive reality module, or a type of device on which the immersive reality module is being executed. As illustrated in FIG. 2A, a system 200 includes the immersive platform 110B of FIG. 1B, a sensor 230, a HMD 250, and a haptic-enabled wearable device 270. As stated above, the immersive reality generating device 110B may be a desktop computer, laptop, tablet computer, a server, or mobile phone that is configured to execute the immersive reality module 111a, the context determination module 111b, and the haptic control module 111c. The sensor 230 may be the same as, or similar to, the sensor 130 described above. In one example, the sensor 230 is a camera. In an embodiment, the haptic-enabled wearable device 270 may be a haptic-enabled ring worn on a hand H, or may be any other hand-worn haptic-enabled wearable device, such as a haptic-enabled wrist band or haptic-enabled glove. In an embodiment, the HMD 250 may be considered another wearable device. The HMD 250 may be haptic-enabled, or may lack haptic functionality.

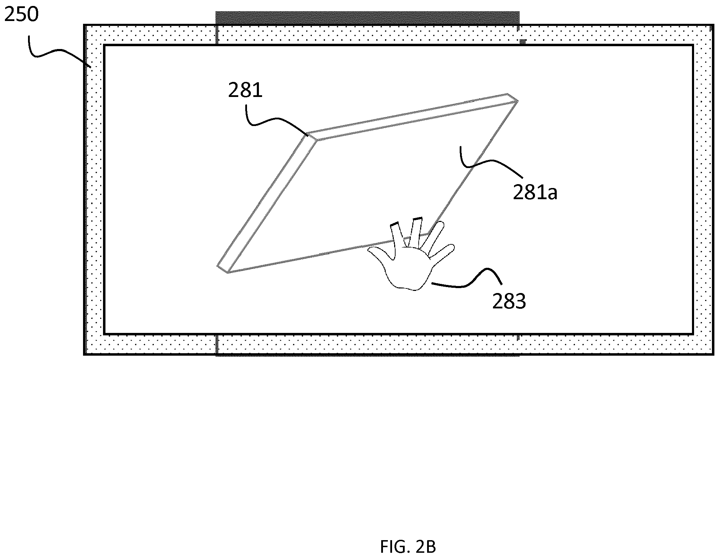

In an embodiment, the hand H and/or the haptic-enabled wearable device 270 may be used as a proxy for a virtual cursor that is used to interact with an immersive reality environment. For instance, FIG. 2B illustrates a 3D VR environment that is displayed by HMD 250. The user's hand H or the haptic-enabled wearable device 270 may act as a proxy for a virtual cursor 283 in the 3D VR environment. More specifically, the user may move the virtual cursor 283 to interact with a virtual object 281 by moving his or her hand H and/or the haptic-enabled wearable device 270. The cursor 283 may move in a way that tracks movement of the hand H.

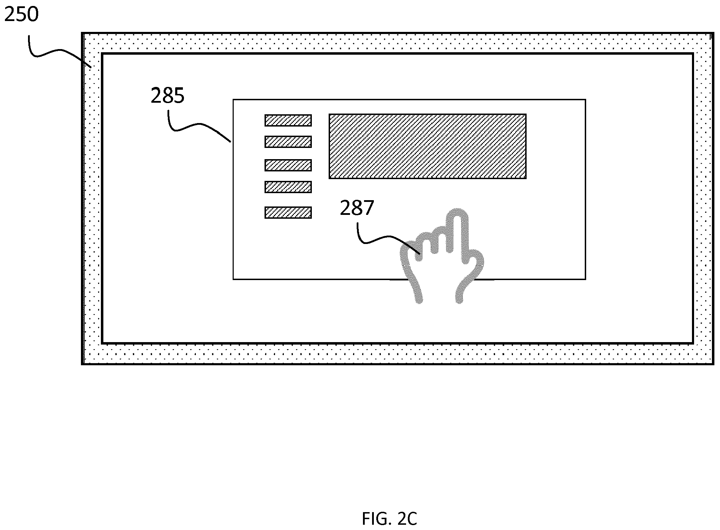

Similarly, FIG. 2C illustrates a 2D VR environment that is displayed by HMD 250. In the 2D VR environment, a user may interact with a virtual 2D menu 285 with a virtual cursor 287. The user may control the virtual cursor 287 by moving his or her hand H, or by moving the haptic-enabled wearable device 270. In an embodiment, the system 200 may further include a handheld game controller or other gaming peripheral, and the cursor 283/287 may be moved based on movement of the handheld game controller.

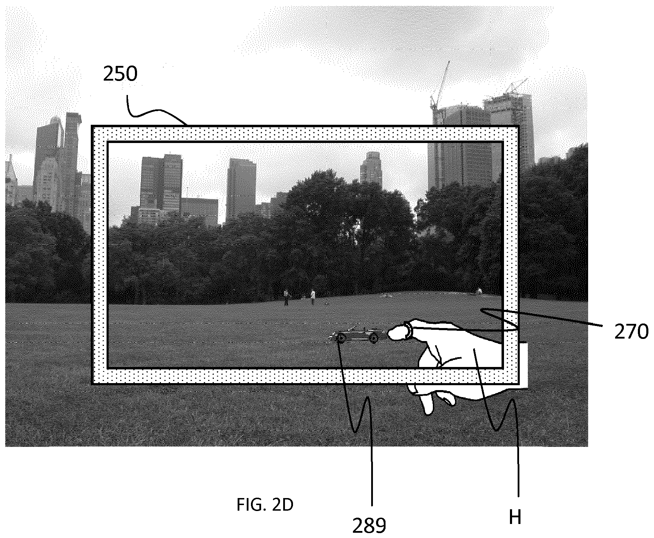

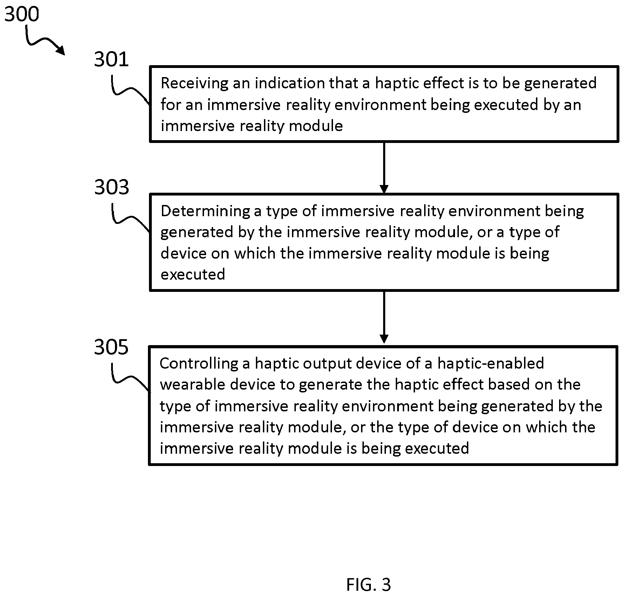

Further, FIG. 2D illustrates an example of an AR environment displayed on the HMD 250. The AR environment may display a physical environment, such as a park in which a user of the AR environment is located, and may display a virtual object 289 superimposed on an image of the physical environment. In an embodiment, the virtual object 289 may be controlled based on movement of the user's hand H and/or of the haptic-enabled wearable device 270. The embodiments in FIGS. 2A-2D will be discussed in more detail to illustrate aspects of a method in FIG. 3.

FIG. 3 illustrates a method 300 for generating haptic effects for an immersive reality environment based the context of a type of immersive reality environment being generated by an immersive reality module, or the context of a type of device on which the immersive reality module is being executed. In an embodiment, the method 300 may be performed by the system 200, and more specifically by the processing circuit 113 executing the haptic control module 111c on the immersive reality generating device 110B. In an embodiment, the method may be performed by the processing circuit 123 executing the haptic control module 121a on the haptic-enabled wearable device 120C or 120D, as shown in FIGS. 1C and 1D. In an embodiment, the method may be performed by a processing circuit 153 of the haptic management device 150, as shown in FIG. 1E.

In an embodiment, the method 300 begins at step 301, in which the processing circuit 113/123/153 receives an indication that a haptic effect is to be generated for an immersive reality environment being executed by an immersive reality module, such as immersive reality module 111a. The indication may include a command from the immersive reality module 111a, or may include an indication that a particular event (e.g., virtual collision) within the immersive reality environment has occurred, wherein the event triggers a haptic effect.

In step 303, the processing circuit 113/123/153 may determine a type of immersive reality environment being generated by the immersive reality module 111a, or a type of device on which the immersive reality module 111a is being executed. In an embodiment, the types of immersive reality environment may include a two-dimensional (2D) environment, a three-dimensional (3D) environment, a mixed reality environment, a virtual reality environment, or an augmented reality environment. In an embodiment, the types of device on which the immersive reality module 111a is executed may include a desktop computer, a laptop computer, a server, a standalone HMD, a tablet computer, or a mobile phone.

In step 305, the processing circuit 113/123/153 may control the haptic-enabled wearable device 120A/120C/120D/270 to generate the haptic effect based on the type of immersive reality environment being generated by the immersive reality module 111a, or on the type of device on which the immersive reality module is being executed.

For instance, FIG. 2B illustrates an example of step 305 in which the immersive reality environment is a 3D environment being generated at least in part on the immersive reality generating device 100B. The 3D environment may include a 3D virtual object 281 that is displayed within a 3D coordinate system of the 3D environment. The haptic effect in this example may be based on a position of the user's hand H (or of a gaming peripheral) in the 3D coordinate system. In FIG. 2B, the 3D coordinate system of the 3D environment may have a height or depth dimension. The height or depth dimension may indicate, e.g., whether the virtual cursor 283, or more specifically the user's hand H, is in virtual contact with a surface 281a of the virtual object, and/or how far the virtual cursor 283 or the user's hand H has virtually pushed past the surface 281a. In such a situation, the processing circuit 113/123/153 may control the haptic effect to be based on the height or depth of the virtual cursor 283 or the user's hand H, which may indicate how far the virtual cursor 283 or the user's hand H has pushed past the surface 281a.

In another example of step 305, FIG. 2C illustrates the 2D environment displaying a virtual menu 285 that is displayed in a 2D coordinate system of the 2D environment. In this example, the processing circuit 113/123/153 may control a haptic output device of the haptic-enabled wearable device 270 to generate a haptic effect based on a 2D coordinate of a user's hand H or of a user input element. For instance, the haptic effect may be based on a position of the user's hand H or user input element in the 2D coordinate system to indicate what button or other menu item has been selected by the cursor 287.

In another example of step 305, FIG. 2D illustrates an example of an AR environment displayed on the HMD 250. In this example, the AR environment displays a virtual object 289 superimposed on an image of a physical environment, such as a park. In an embodiment, the processing circuit 113/123/153 may control a haptic output device of the haptic-enabled wearable device 270 to generate a haptic effect based on a simulated interaction between the virtual object 289 and the image of the physical environment, such as the virtual object 289 driving over the grass of the park in the image of the physical environment. The haptic effect may be based on, e.g., a simulated traction (or, more generally, friction) between the virtual object 289 and the grass in the image of the physical environment, a velocity of the virtual object 289 within a coordinate system of the AR environment, a virtual characteristic (also referred to as a virtual property) of the virtual object 289, such as a virtual tire quality, or any other characteristic.

In an embodiment, a haptic effect of the method 300 may be based on whether the user of the immersive reality environment is holding a handheld user input device, such as a handheld game controller or other gaming peripheral. For instance, a drive signal magnitude of the haptic effect on the haptic-effect wearable device 270 may be higher if the user is not holding a handheld user input device.

In an embodiment, a haptic effect may be further based on a haptic capability of the haptic-enabled wearable device. In an embodiment, the haptic capability indicates at least one of a type or strength of haptic effect the haptic-enabled wearable device 270 is capable of generating thereon, wherein the strength may refer to, e.g., maximum acceleration, deformation, pressure, or temperature. In an embodiment, the haptic capability of the haptic-enabled wearable device 270 indicates at least one of what type(s) of haptic output device are in the haptic-enabled device, how many haptic output devices are in the haptic-enabled device, what type(s) of haptic effect each of the haptic output device(s) is able to generate, a maximum haptic magnitude that each of the haptic output device(s) is able to generate, a frequency bandwidth for each of the haptic output device(s), a minimum ramp-up time or brake time for each of the haptic output device(s), a maximum temperature or minimum temperature for any thermal haptic output device of the haptic-enabled device, or a maximum coefficient of friction for any ESF or USF haptic output device of the haptic-enabled device

In an embodiment, step 305 may involve modifying a haptic effect characteristic, such as a haptic parameter value or a haptic driving signal, used to generate a haptic effect. For instance, step 305 may involve the haptic-enabled wearable device 270, which may be a second type of haptic-enabled device, such as a haptic-enabled ring. In such an example, step 305 may involve retrieving a defined haptic driving signal or a defined haptic parameter value associated with a first type of haptic-enabled wearable device, such as a haptic wrist band. The step 305 may involve modifying the defined haptic driving signal or the defined haptic parameter value based on a difference between the first type of haptic-enabled device and the second type of haptic-enabled device.

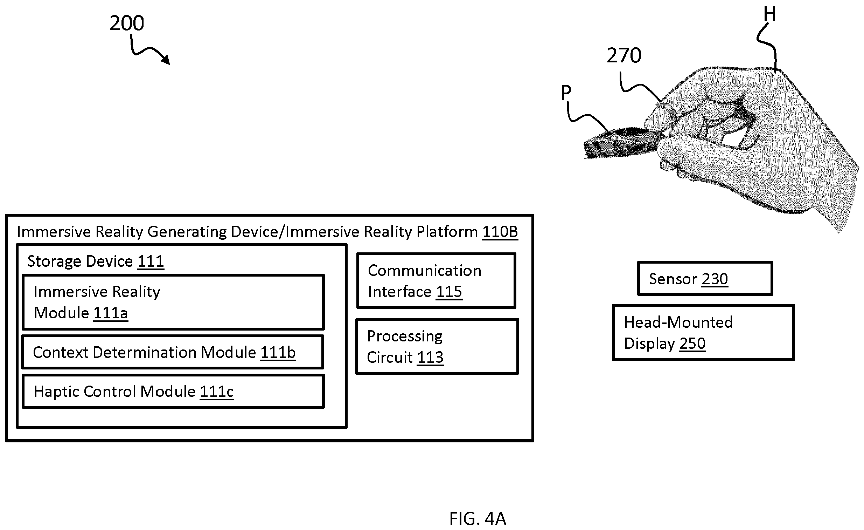

As stated above, a context of user interaction may refer to a manner in which a user is using a physical object to interact with an immersive reality environment. FIG. 4A depicts an embodiment in which the system 200 of FIG. 2A is used to provide a haptic effect that is based on an interaction between a physical object P and an immersive reality environment. The physical object P may be any physical object, such as a toy car depicted in FIG. 4A. In some cases, the physical object P refers to an object that is not a user's hand H, not a haptic-enabled wearable device, and/or not an electronic handheld game controller. In some cases, the physical object P has no electronic game controller functionality. More specifically, the physical object P may have no capability to provide an electronic input signal for the immersive reality generating device 110B, or may be limited to providing only electronic profile information (if any) that describes a characteristic of the physical object P. That is, in some cases the physical object P may have a storage device, or more generally a storage medium, that stores profile information describing a characteristic of the physical object P. The storage medium may be, e.g., a RFID tag, a Flash read-only memory (ROM), a SSD memory, or any other storage medium. The storage medium may be read electronically via, e.g., Bluebooth® or some other wireless protocol. In some cases, the physical object P may have a physical marking, such as a barcode, that may encode profile information. The profile information may describe a characteristic such as an identity of the physical object or a type of the physical object (e.g., a toy car). In some cases, the physical object has no such storage medium or physical marking.

In an embodiment, the physical object P may be detected or otherwise recognized based on sensor data from the sensor 230. For instance, the sensor 230 may be a camera configured to capture an image of a user's forward field of view. In the embodiment, the context determination module 111b may be configured to apply an image recognition algorithm to detect the presence of the physical object P.

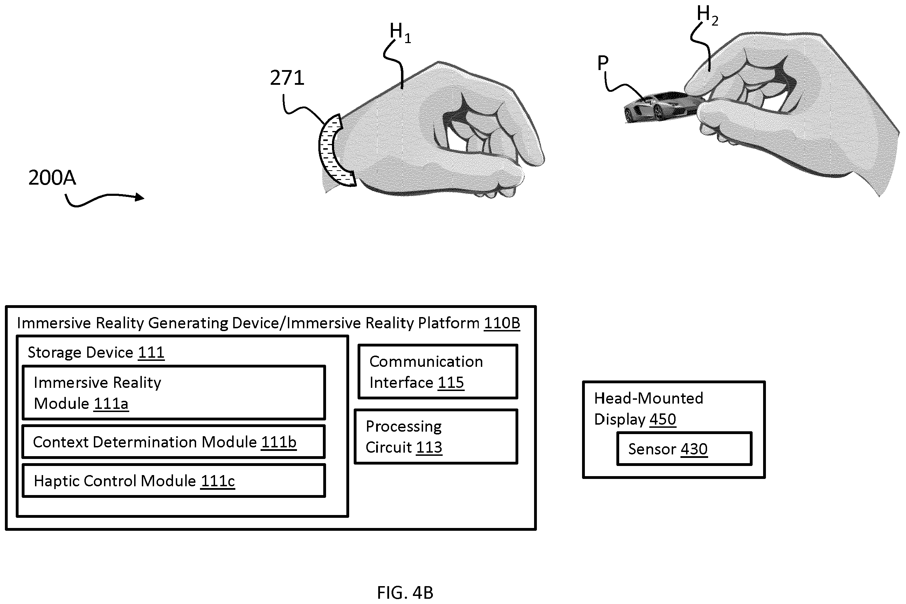

FIG. 4B depicts a system 200A that is similar to the system 200 of FIGS. 2A and 4A, but that includes a haptic-enabled device 271 in addition to or instead of haptic-enabled wearable device 270. The haptic-enabled device 271 may be worn on a hand H₁ that is different than a hand H₂ holding the physical object P. Additionally, the system 200A may include a HMD 450 having a sensor 430 that is a camera embedded in the HMD 450.

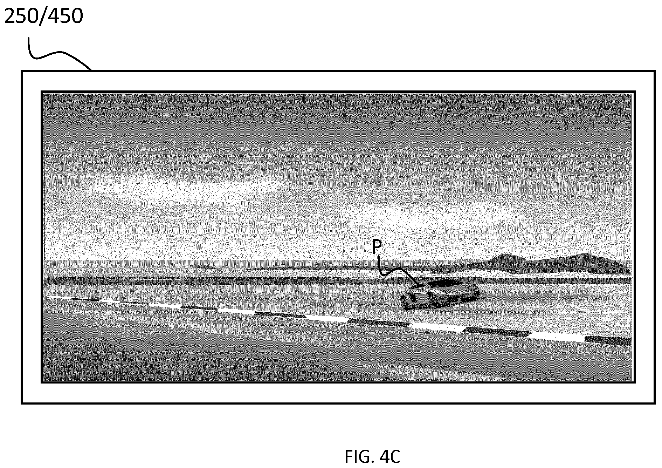

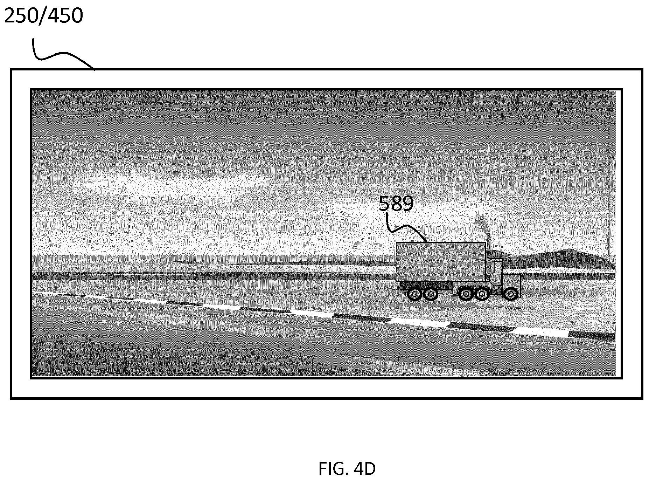

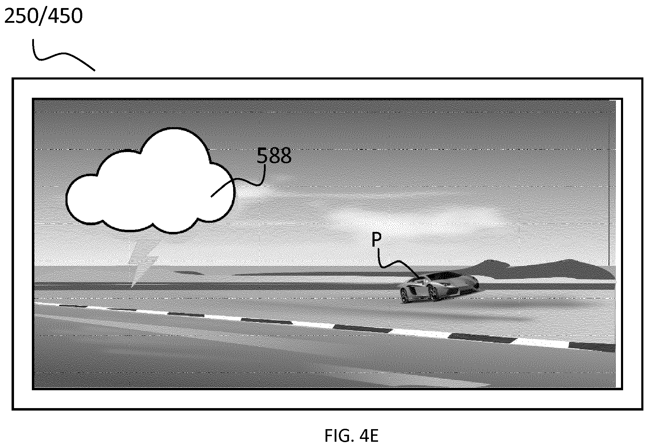

FIG. 4C illustrates an immersive reality environment displayed on the HMD 250/450. The immersive reality environment may include an image of the physical object P along with an image of a virtual race track. When a user moves the physical object P in the user's physical environment, the physical object P may also move in the immersive reality environment in the same or similar manner. FIG. 4D also illustrates an immersive reality environment that includes a virtual racetrack displayed on the HMD 250/450. In this embodiment, the physical object P may be a proxy for or otherwise associated with a virtual object 589, such as a virtual truck. In such an embodiment, the virtual truck may be displayed instead of the physical toy car. The user may control movement of the virtual truck in the coordinate system of the immersive reality environment by moving the physical toy car in the physical environment of the user. Additionally, FIG. 4E is similar to the immersive reality environment of FIG. 4C, but further shows a virtual object 588 that may have a simulated interaction with the physical object P.

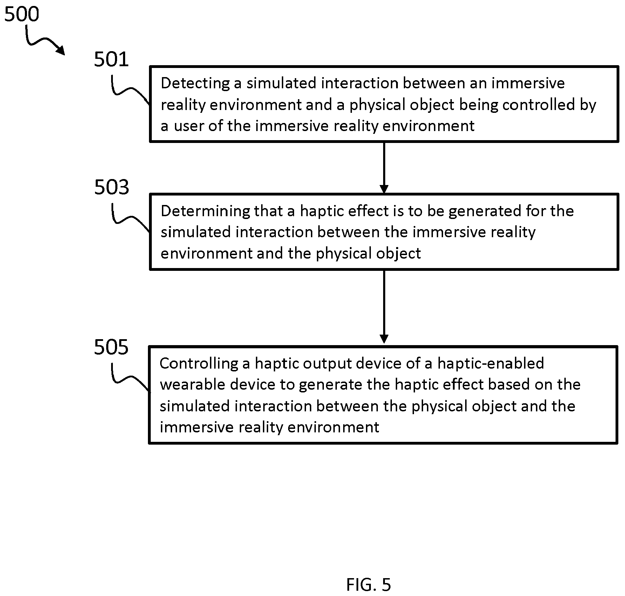

FIG. 5 illustrates a method 500 for generating a haptic effect based on interaction between a physical object, such as physical object P of FIGS. 4A and 4B, and an immersive reality environment. The method 500 may be performed by the processing circuit 113 of FIGS. 4A and 4B, or by another processing circuit, such as the processing circuit 123 or 153. The processing circuit 113/123/153 may be executing a haptic control module 111c/121a/151a, or any other module.

In an embodiment, the method 500 may begin at step 501, in which the processing circuit 113/123/153 may detect a simulated interaction between a physical object and an immersive reality environment. For instance, step 501 may involve the processing circuit 113 detecting a simulated interaction between the physical toy car and a virtual racetrack of the immersive reality environment depicted in FIG. 4C. The simulated interaction may be, for instance, a simulated contact that creates traction (or, more generally, friction) between the toy car and the virtual racetrack.

In step 503, the processing circuit 113/123/153 may determine a haptic effect to be generated based on the simulated interaction between the physical object and the immersive reality environment. For instance, step 503 may involve the processing circuit 113 adjusting a haptic effect magnitude based on a level of the simulated friction between the physical toy car and the virtual racetrack of FIG. 4C. In one example, the level of simulated friction may be based on a virtual characteristic of the virtual racetrack, such as a virtual texture. For instance, the virtual texture may be a texture associated with asphalt, concrete, or dirt.

In step 505, the processing circuit 113/123/153 may control a haptic output device in communication with the processing circuit 113/123/153, such as a haptic output device of the haptic-enabled wearable device 270, to generate the haptic effect based on the simulated interaction.

In an embodiment, the haptic effect may be based on a physical relationship between the physical object P and a haptic-enabled wearable device 270/271. For instance, the haptic effect may have a magnitude (e.g., magnitude of deformation, vibration, friction, or temperature effect) that is based on a proximity between the physical object P and the haptic-enabled wearable device 271 in FIG. 4B. In an embodiment, a haptic effect may be based on a characteristic of how the physical object is being moved, such as a speed of the movement. In an embodiment, a haptic effect may be based on a physical characteristic of the physical object, such as its size or shape, and/or based on a virtual characteristic assigned to the physical object, such as a virtual mass or virtual texture.

FIG. 4E illustrates an embodiment in which a haptic effect may be based on a relationship between the physical object P and the virtual object 588 in the immersive reality environment. The relationship may include, e.g., a distance (or, more generally, level of proximity) between the physical object P and the virtual object 588 in a coordinate system of the immersive reality environment of FIG. 4E. For instance, the distance may be a virtual distance that is measured in a coordinate system of the immersive reality environment. In the example of FIG. 4E, a haptic effect may be generated to convey a rumble of thunder caused by the virtual object 588. In this example, a magnitude of the haptic effect may decrease in magnitude as the virtual distance between the virtual object 588 and the physical object P increases.

As stated above, a haptic effect may be based on a physical characteristic of the physical object P, such as a size, weight, or physical appearance of the physical object. For instance, a physical object having a first size may be associated with a first haptic magnitude, and a physical object having a second, bigger size may be associated with a second, higher haptic magnitude. In an embodiment, the haptic effect may be based on an image classification of the physical appearance of the physical object. The image classification may be performed via an image classification algorithm. For instance, the image classification algorithm may classify the physical object as a car, which may affect the haptic effect that is generated. In some instances, the image classification may affect what immersive reality environment is generated.

In an embodiment, a physical object may be assigned one or more virtual properties (also referred to as virtual characteristics), such as a virtual mass, a virtual appearance (e.g., virtual shape), a virtual texture, a virtual charge, or a virtual force of attraction or repulsion. For instance, with reference to FIG. 4D, the physical object P may be assigned a virtual shape that is the shape of a virtual truck, a virtual mass, and a virtual texture for its tires. A haptic effect may be generated to simulate friction between the virtual truck and the virtual racetrack, which may be based on the virtual mass of the truck and the virtual texture for its tires.

In an embodiment, a physical object may be used to determine which immersive reality module to execute, or more generally which immersive reality environment to generate. For instance, with reference to FIG. 4A, the immersive reality generating device 110B may be able to generate a plurality of different immersive reality environments, such as a first immersive reality environment that presents a virtual racetrack and a second immersive reality environment that presents a virtual classroom. In an embodiment, the method 500 may include selecting an immersive reality environment to generate from among the first immersive reality environment and the second immersive reality environment based on a characteristic of the physical object. In some scenarios, the characteristic may be a shape, color, or size of the physical object. In some scenarios, the characteristic may be an image classification of the physical object. For instance, the physical object P of FIGS. 4A and 4B may be classified by an image classification algorithm, such as a convolutional neural network, as a car. An immersive reality environment that matches this classification may be selected. For instance, the first immersive reality environment may be considered to match the classification of a car because the immersive reality environment relates to racing cars. As a result, the first immersive reality environment may be selected.

As stated above, a physical object may have a storage medium that stores a profile describing characteristics of the physical object. In an embodiment, a selection of the immersive reality environment may be based on the profile. In one example, the profile may describe a physical object as being a car. As a result, the first immersive reality environment noted above may be selected to be generated.

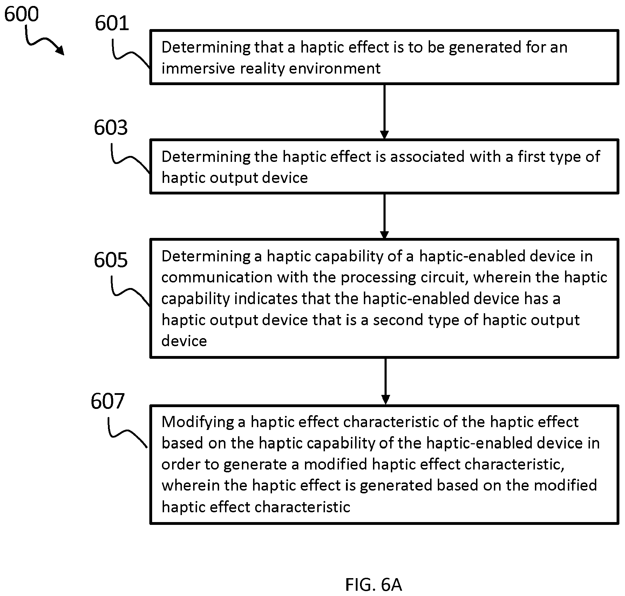

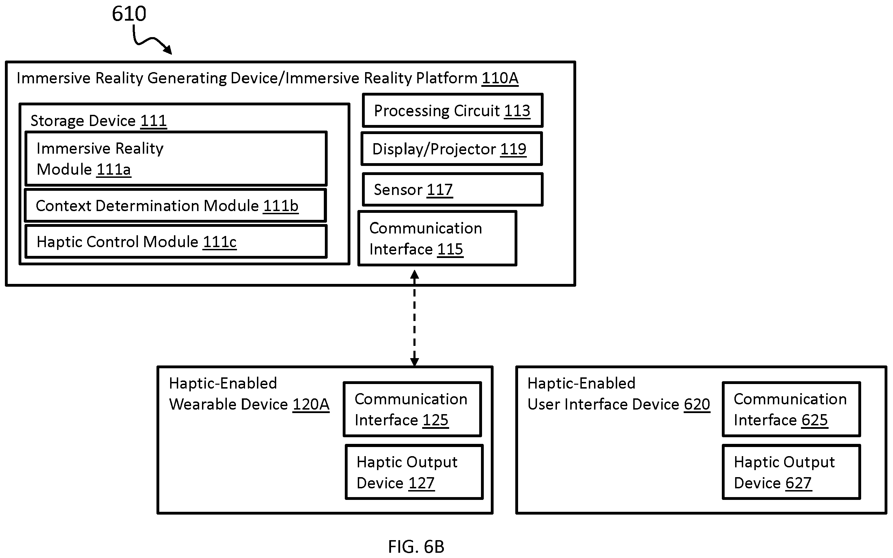

As stated above, a context of user interaction in an immersive reality environment may in an embodiment refer to a haptic capability of a haptic-enabled device (e.g., a haptic-enabled wearable device), and a haptic effect may be generated based on the haptic capability of a haptic-enabled device. For instance, FIG. 6A illustrates a method 600 for generating a haptic effect based on haptic capability. In an embodiment, the method 600 may be performed by a system 610 of FIG. 6B. The system 610 may include the immersive reality generating device 110A and the haptic-enabled wearable device 120A of FIG. 1A, as well as a haptic-enabled user interface device 620, having a communication interface 625 and a haptic output device 627, that may be a wearable device or another type of device.

In an embodiment, the method 600 may begin at step 601, in which a processing circuit determines that a haptic effect is to be generated for an immersive reality environment. The processing circuit may be, e.g., processing circuit 113 executing haptic control module 111c.

In step 603, the processing circuit may determine that the haptic effect is a defined haptic effect (also referred to as a pre-defined haptic effect) associated with a first type of haptic output device. For instance, the processing circuit may determine that the haptic effect is associated with an ERM actuator, and has haptic effect characteristics associate with the ERM actuator.

In step 605, the processing circuit may determine a haptic capability of the haptic-enabled device in communication with the processing circuit, wherein the haptic capability indicates that the haptic-enabled device has a haptic output device that is a second type of haptic output device different from the first type of haptic output device. For instance, with reference to FIG. 6B, the processing circuit 113 may determine a haptic capability of the haptic-enabled device 120A, wherein the determination may involve determining that the device 120A has a haptic output device 127 that is, e.g., a LRA actuator.

In step 607, the processing circuit may modify a haptic effect characteristic of the defined haptic effect based on the haptic capability of the haptic-enabled device in order to generate a modified haptic effect with a modified haptic effect characteristic. For instance, with reference to FIG. 6B, the processing circuit may modify a haptic driving signal that was associated with the ERM actuator in order to generate a modified haptic driving signal that is more suitable for the LRA of the haptic-enabled device 120A.

In an embodiment, the haptic capability may indicate, e.g., at least one of a type of haptic effect the haptic-enabled user interface device is capable of generating thereon, a maximum magnitude the haptic-enabled user interface device is capable of generate for the haptic effect, a total number of haptic output devices included in the haptic-enabled user interface device, a bandwidth or frequency band of haptic effects that the haptic-enabled user interface device is able to generate, or a minimum response time that the haptic-enabled user interface device is capable of for ramping up the haptic effect to a steady state or for braking the haptic effect to a substantially complete stop.

In an embodiment, the haptic capabilities of various haptic-enabled devices may be used to select between them. For example, step 607 above may be supplemented or replaced by a step in which the processing circuit selects a haptic-enabled device other than device 120A to generate a haptic effect. Referring to FIG. 6B, if the haptic-enabled user interface device 620 included a haptic output device 627 that is an ERM actuator, the processing circuit 113 may in this embodiment select the haptic-enabled user interface device 620 to generate the haptic effect. In some instances, the haptic effect is generated by only the selected haptic-enabled devices.

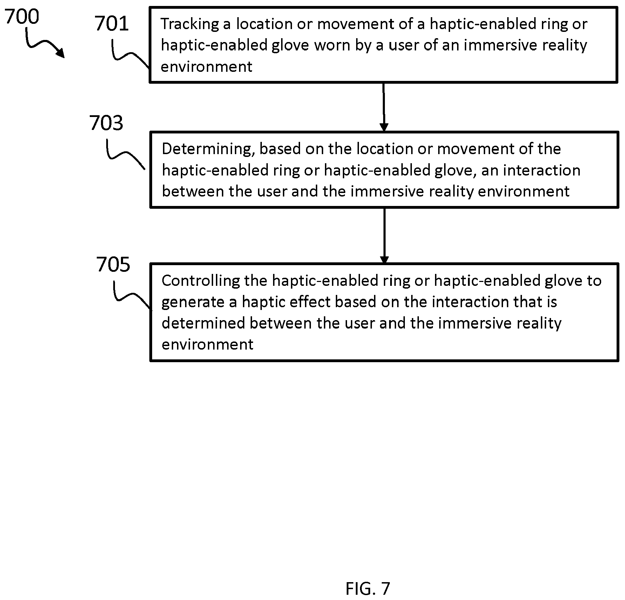

As stated above, a haptic-enabled wearable device may in an embodiment facilitate hand tracking or hand gesture detection. FIG. 7 illustrates a method 700 for using a haptic-enabled ring or haptic-enabled glove to facilitate tracking user interaction in an immersive reality environment. In an embodiment, the method 700 may be performed by the processing circuit 113 of system 200 of FIG. 2A.

In an embodiment, the method 700 begins at step 701, in which the processing circuit tracks a location or movement of a haptic-enabled ring (e.g., 270) or haptic-enabled glove worn by a user of an immersive reality environment. In some cases, step 701 may involve applying an image processing algorithm that is configured to detect a shape of the haptic-enabled ring or haptic-enabled glove. In some instances, step 701 may involve tracking a wireless signal emitted by the haptic-enabled ring or haptic-enabled glove. In some instances, step 701 may involve performing infrared detection to detect any heat emitted by the haptic-enabled ring or haptic-enabled glove.

In step 703, the processing circuit determines, based on the location or movement of the haptic-enabled ring or haptic-enabled glove, an interaction between a user and the immersive reality environment. For instance, the processing circuit may use a location of the haptic-enabled ring or haptic-enabled glove to determine a location of the user in a coordinate system of the immersive reality environment. This determination may indicate how far away the hand is from, e.g., a virtual object of the immersive reality environment. In another example, the processing circuit may detect a hand gesture based on movement of the haptic-enabled ring or haptic-enabled glove (e.g., a hand gesture for switching between a VR environment and a mixed reality environment). Gesture detection is discussed in more detail in U.S. Patent Appl. No. 15/958,617, titled "Systems, Devices, and Methods for Providing Immersive Reality Interface Modes," the entire content of which is incorporated by reference herein in its entirety). In an additional example, the processing circuit may use movement of the haptic-enabled ring or haptic-enabled glove as an approximation of movement of a physical object, such as physical object P in FIGS. 4A and 4B.

In step 705, the processing circuit controls the haptic-enabled ring or haptic-enabled glove to generate a haptic effect based on the interaction that is determined between the user and the immersive reality environment. In an embodiment, the haptic effect is based on a relationship, such as proximity, between the haptic-enabled ring or haptic-enabled glove and a virtual object of the immersive reality environment. In an embodiment, the haptic effect is based on a virtual texture or virtual hardness of the virtual object. In an embodiment, the haptic effect is triggered in response to the haptic-enabled ring or the haptic-enabled glove crossing a virtual surface or virtual boundary of the immersive reality environment, and wherein the haptic effect is a micro-deformation effect that approximates a kinesthetic effect.

In one example of the above embodiments, a user may be wearing a haptic-enabled ring. The user may have a mobile device, such as a mobile phone, having a small size. As a result, the mobile device may no longer have a built-in haptic actuator. The mobile device instead communicates with the haptic-enabled ring. When getting alerts or interacting with the mobile device, haptic effects (e.g., haptic sensations) are rendered on the haptic-enabled ring. When the user puts the mobile device into a HMD shell, the user's hands can be tracked while the user is interacting with a virtual reality (VR) world. As the user interacts with physical or virtual objects, haptic effects can be rendered on the haptic-enabled ring. With a quick gesture, the user's VR experience can turn into a mixed reality experience. The user can now interact with physical objects and virtual objects. A system that is generating the mixed reality environment may use camera recognition to be aware of what objects the user is interacting with and if those objects need haptic rendering. For example, the user may pick up a small Hot Wheels® car and load a virtual race track. As the user moves the physical car, haptic effects are rendered on the user's haptic-enabled ring (on the hand moving the car). The haptic effect may be based on a property such as a velocity of the car's motion and the virtual texture beneath the car. If the user is wearing the haptic-enabled ring on his off hand (the hand that is not holding the car), the haptic effects may render differently on that hand (which may be referred to more generally as an endpoint) based on the interaction that the user is performing as well as based on any spatial interaction occurring around the user.

In an embodiment, the haptic-enabled wearable device of FIGS. 1A through FIG. 7 may be replaced by another type of haptic-enabled device, such as one or more ultrasonic haptic-enabled devices that are configured to propel bursts of air toward a user.

While various embodiments have been described above, it should be understood that they have been presented only as illustrations and examples of the present invention, and not by way of limitation. It will be apparent to persons skilled in the relevant art that various changes in form and detail can be made therein without departing from the spirit and scope of the invention. Thus, the breadth and scope of the present invention should not be limited by any of the above-described exemplary embodiments, but should be defined only in accordance with the appended claims and their equivalents. It will also be understood that each feature of each embodiment discussed herein, and of each reference cited herein, can be used in combination with the features of any other embodiment. All patents and publications discussed herein are incorporated by reference herein in their entirety.

### Discussion of Various Embodiments:

Embodiment 1 is a method of providing haptic effects for an immersive reality environment, comprising: receiving, by a processing circuit, an indication that a haptic effect is to be generated for an immersive reality environment being executed by an immersive reality module; determining, by the processing circuit, a type of immersive reality environment being generated by the immersive reality module, or a type of device on which the immersive reality module is being executed; and controlling, by the processing circuit, a haptic output device of a haptic-enabled wearable device to generate the haptic effect based on the type of immersive reality environment being generated by the immersive reality module, or the type of device on which the immersive reality module is being executed.
Embodiment 2 is the method of embodiment 1, wherein the type of device on which the immersive reality module is being executed has no haptic generation capability.
Embodiment 3 is the method of embodiment 1 or 2, wherein the type of the immersive reality environment is one of a two-dimensional (2D) environment, a three-dimensional (3D) environment, a mixed reality environment, a virtual reality (VR) environment, or an augmented reality (AR) environment.
Embodiment 4 is the method of embodiment 3, wherein when the type of the immersive reality environment is a 3D environment, the processing circuit controls the haptic output device to generate the haptic effect based on a 3D coordinate of a hand of a user in a 3D coordinate system of the 3D environment, or based on a 3D gesture in the 3D environment.
Embodiment 5 is the method of embodiment 3 or 4, wherein when the type of immersive reality environment is a 2D environment, the processing circuit controls the haptic output device to generate the haptic effect based on a 2D coordinate of a hand of a user in a 2D coordinate system of the 2D environment, or based on a 2D gesture in the 2D environment.
Embodiment 6 is the method of any one of embodiments 3 to 5, wherein when the type of immersive reality environment is an AR environment, the processing circuit controls the haptic output device to generate the haptic effect based on a simulated interaction between a virtual object of the AR environment and a physical environment depicted in the AR environment.
Embodiment 6 is the method of any one of embodiments 1 to 5, wherein the type of the immersive reality environment is determined to be a second type of immersive reality environment, and wherein the step of controlling the haptic output device to generate the haptic effect comprises retrieving a defined haptic effect characteristic associated with a first type of immersive reality environment, and modifying the defined haptic effect characteristic to generate a modified haptic effect characteristic, wherein the haptic effect is generated with the modified haptic effect characteristic.
Embodiment 7 is the method of any one of embodiments 1 to 6, wherein the defined haptic effect characteristic includes a haptic driving signal or a haptic parameter value, wherein the haptic parameter value includes at least one of a drive signal magnitude, a drive signal duration, or a drive signal frequency.
Embodiment 9 is the method of any one of embodiments 1 to 8, wherein the defined haptic effect characteristic includes at least one of a magnitude of vibration or deformation, a duration of vibration or deformation, a frequency of vibration or deformation, a coefficient of friction for an electrostatic friction effect or ultrasonic friction effect, or a temperature.
Embodiment 10 is the method of any one of embodiments 1 to 9, wherein the type of device on which the immersive reality module is being executed is one of a game console, a mobile phone, a tablet computer, a laptop, a desktop computer, a server, or a standalone a head-mounted display (HMD).
Embodiment 11 is the method of embodiment 10, wherein the type of the device on which the immersive reality module is being executed is determined to be a second type of device, and wherein the step of controlling the haptic output device to generate the haptic effect comprises retrieving a defined haptic effect characteristic associated with a first type of device for executing any immersive reality module, and modifying the defined haptic effect characteristic to generate a modified haptic effect characteristic, wherein the haptic effect is generated with the modified haptic effect characteristic.
Embodiment 12 is the method of any one of embodiments 1 to 11, further comprising determining, by the processing circuit, whether a user who is interacting with the immersive reality environment is holding a haptic-enabled handheld controller configured to provide electronic signal input for the immersive reality environment, wherein the haptic effect generated on the haptic-enabled wearable device is based on whether the user is holding a haptic-enabled handheld controller.
Embodiment 13 is the method of any one of embodiments 1 to 12, wherein the haptic effect is further based on what software other than the immersive reality module is being executed or is installed on the device.
Embodiment 14 is the method of any one of embodiments 1 to 13, wherein the haptic effect is further based on a haptic capability of the haptic output device of the haptic-enabled wearable device, and wherein, optionally,
Embodiment 15 is method of embodiment 14, wherein the haptic output device is a second type of haptic output device, and wherein controlling the haptic output device comprises retrieving a defined haptic effect characteristic associated with a first type of haptic output device, and modifying the defined haptic effect characteristic to generate a modified haptic effect characteristic, wherein the haptic effect is generated based on the modified haptic effect characteristic.
Embodiment 16 is a method of providing haptic effects for an immersive reality environment, comprising: detecting, by a processing circuit, a simulated interaction between an immersive reality environment and a physical object being controlled by a user of the immersive reality environment; determining, by the processing circuit, that a haptic effect is to be generated for the simulated interaction between the immersive reality environment and the physical object; and controlling, by the processing circuit, a haptic output device of a haptic-enabled wearable device to generate the haptic effect based on the simulated interaction between the physical object and the immersive reality environment.
Embodiment 17 is the method of embodiment 16, wherein the physical object is a handheld object being moved by a user of the immersive reality environment.
Embodiment 18 is the method of embodiment 17, wherein the handheld object is a handheld user input device configured to provide electronic signal input for the immersive reality environment.
Embodiment 19 is the method of embodiment 17 or 18, wherein the handheld object has no ability to provide electronic signal input for the immersive reality environment.
Embodiment 20 is the method of embodiment 19, wherein the simulated interaction includes simulated contact between the physical object and a virtual surface of the immersive reality environment, and wherein the haptic effect is based on a virtual texture of the virtual surface.
Embodiment 21 is the method of any one of embodiments 16 to 20, further comprising determining a physical characteristic of the physical object, wherein the haptic effect is based on the physical characteristic of the physical object, and wherein the physical characteristic includes at least one of a size, color, or shape of the physical object.
Embodiment 22 is the method of any one of embodiments 16 to 21, further comprising assigning a virtual characteristic to the physical object, wherein the haptic effect is based on the virtual characteristic, and wherein the virtual characteristic include at least one of a virtual mass, a virtual shape, a virtual texture, or a magnitude of virtual force between the physical object and a virtual object of the immersive reality environment.
Embodiment 23 is the method of any one of embodiments 16 to 22, wherein the haptic effect is based on a physical relationship between the haptic-enabled wearable device and the physical object.
Embodiment 24 is the method of any one of embodiments 16 to 23, wherein the haptic effect is based on proximity between the haptic-enabled wearable device and a virtual object of the immersive reality environment.
Embodiment 25 is the method of any one of embodiments 16 to 24, wherein the haptic effect is based on a movement characteristic of the physical object.
Embodiment 26 is the method of any one of embodiments 16 to 25, wherein the physical object includes a memory that stores profile information describing one or more characteristics of the physical object, wherein the haptic effect is based on the profile information.
Embodiment 27 is the method of any one of embodiments 16 to 26, wherein the immersive reality environment is generated by a device that is able to generate a plurality of different immersive reality environments, the method further comprising selecting the immersive reality environment from among the plurality of immersive reality environments based on a physical or virtual characteristic of the physical object.
Embodiment 28 is the method of embodiment 27, further comprising applying an image classification algorithm to a physical appearance of the physical object to determine an image classification of the physical object, wherein selecting the immersive reality environment from among the plurality of immersive reality environments is based on the image classification of the physical object.
Embodiment 29 is the method of embodiment 27 or 28, wherein the physical object includes a memory that stores profile information describing a characteristic of the physical object, wherein selecting the immersive reality environment from among the plurality of immersive reality environments is based on the profile information stored in the memory.
Embodiment 30 is a method of providing haptic effects for an immersive reality environment, comprising: determining, by a processing circuit, that a haptic effect is to be generated for an immersive reality environment; determining, by the processing circuit, that the haptic effect is a defined haptic effect associated with a first type of haptic output device; determining, by the processing circuit, a haptic capability of a haptic-enabled device in communication with the processing circuit, wherein the haptic capability indicates that the haptic-enabled device has a haptic output device that is a second type of haptic output device; and modifying a haptic effect characteristic of the defined haptic effect based on the haptic capability of the haptic-enabled device in order to generate a modified haptic effect with a modified haptic effect characteristic.
Embodiment 31 is the method of embodiment 30, wherein the haptic capability of the haptic-enabled device indicates at least one of what type(s) of haptic output device are in the haptic-enabled device, how many haptic output devices are in the haptic-enabled device, what type(s) of haptic effect each of the haptic output device(s) is able to generate, a maximum haptic magnitude that each of the haptic output device(s) is able to generate, a frequency bandwidth for each of the haptic output device(s), a minimum ramp-up time or brake time for each of the haptic output device(s), a maximum temperature or minimum temperature for any thermal haptic output device of the haptic-enabled device, or a maximum coefficient of friction for any ESF or USF haptic output device of the haptic-enabled device.
Embodiment 32 is the method of embodiment 30 or 31, wherein modifying the haptic effect characteristic includes modifying at least one of a haptic magnitude, haptic effect type, haptic effect frequency, temperature, or coefficient of friction.
Embodiment 33 is a method of providing haptic effects for an immersive reality environment, comprising: determining, by a processing circuit, that a haptic effect is to be generated for an immersive reality environment being generated by the processing circuit; determining, by the processing circuit, respective haptic capabilities for a plurality of haptic-enabled devices in communication with the processing circuit; selecting a haptic-enabled device from the plurality of haptic-enabled devices based on the respective haptic capabilities of the plurality of haptic-enabled devices; and controlling the haptic-enabled device that is selected to generate the haptic effect, such that no unselected haptic-enabled device generates the haptic effect.
Embodiment 34 is a method of providing haptic effects for an immersive reality environment, comprising: tracking, by a processing circuit, a location or movement of a haptic-enabled ring or haptic-enabled glove worn by a user of an immersive reality environment; determining, based on the location or movement of the haptic-enabled ring or haptic-enabled glove, an interaction between the user and the immersive reality environment; and controlling the haptic-enabled ring or haptic-enabled glove to generate a haptic effect based on the interaction that is determined between the user and the immersive reality environment.
Embodiment 35 is the method of embodiment 34, wherein the haptic effect is based on a relationship, such as proximity, between the haptic-enabled ring or haptic-enabled glove and a virtual object of the immersive reality environment.
Embodiment 36 is the method of embodiment 35, wherein the relationship indicates proximity between the haptic-enabled ring or haptic-enabled glove and a virtual object of the immersive reality environment
Embodiment 37 is the method of embodiment 35 or 36, wherein the haptic effect is based on a virtual texture or virtual hardness of the virtual object.
Embodiment 38 is the method of any one of embodiments 34 to 37, wherein the haptic effect is triggered in response to the haptic-enabled ring or the haptic-enabled glove crossing a virtual surface or virtual boundary of the immersive reality environment, and wherein the haptic effect is a micro-deformation effect that approximates a kinesthetic effect.
Embodiment 39 is the method of any one of embodiments 34 to 38, wherein tracking the location or movement of the haptic-enabled ring or the haptic-enabled glove comprises the processing circuit receiving from a camera an image of a physical environment in which the user is located, and applying an image detection algorithm to the image to detect the haptic-enabled ring or haptic-enabled glove.
Embodiment 40 is a system, comprising: a immersive reality generating device having a memory configured to store an immersive reality module for generating an immersive reality environment, a processing unit configured to execute the immersive reality module and a communication interface for performing wireless communication, wherein the immersive reality generating device has no haptic output device and no haptic generation capability; and a haptic-enabled wearable device having a haptic output device, a communication interface configured to wirelessly communicate with the communication interface of the immersive reality generating device, wherein the haptic-enabled wearable device is configured to receive, from the immersive reality generating device, an indication that a haptic effect is to be generated, and to control the haptic output device to generate the haptic effect.

## Claims

1. A method of providing haptic effects for an immersive reality environment, comprising:
receiving, by a processing circuit, an indication that a haptic effect is to be generated for an immersive reality environment being executed by an immersive reality module;
determining, by the processing circuit, a type of immersive reality environment being generated by the immersive reality module, or a type of device on which the immersive reality module is being executed; and
controlling, by the processing circuit, a haptic output device of a haptic-enabled wearable device to generate the haptic effect based on the type of immersive reality environment being generated by the immersive reality module, or the type of device on which the immersive reality module is being executed.

2. The method of claim 1, wherein the type of device on which the immersive reality module is being executed has no haptic generation capability.

3. The method of claim 1 or 2, wherein the type of the immersive reality environment is one of a two-dimensional (2D) environment, a three-dimensional (3D) environment, a mixed reality environment, a virtual reality (VR) environment, or an augmented reality (AR) environment.

4. The method of claim 3, wherein when the type of the immersive reality environment is a 3D environment, the processing circuit controls the haptic output device to generate the haptic effect based on a 3D coordinate of a hand of a user in a 3D coordinate system of the 3D environment, or based on a 3D gesture in the 3D environment.

5. The method of claim 3 or 4, wherein when the type of immersive reality environment is a 2D environment, the processing circuit controls the haptic output device to generate the haptic effect based on a 2D coordinate of a hand of a user in a 2D coordinate system of the 2D environment, or based on a 2D gesture in the 2D environment.

6. The method of any of claims 3 to 5, wherein when the type of immersive reality environment is an AR environment, the processing circuit controls the haptic output device to generate the haptic effect based on a simulated interaction between a virtual object of the AR environment and a physical environment depicted in the AR environment.

7. The method of any one of the preceding claims, wherein the type of the immersive reality environment is determined to be a second type of immersive reality environment, and wherein the step of controlling the haptic output device to generate the haptic effect comprises retrieving a defined haptic effect characteristic associated with a first type of immersive reality environment, and modifying the defined haptic effect characteristic to generate a modified haptic effect characteristic, wherein the haptic effect is generated with the modified haptic effect characteristic.

8. The method of any one of the preceding claims, wherein the defined haptic effect characteristic includes a haptic driving signal or a haptic parameter value, wherein the haptic parameter value includes at least one of a drive signal magnitude, a drive signal duration, or a drive signal frequency.

9. The method of any one of the preceding claims, wherein the defined haptic effect characteristic includes at least one of a magnitude of vibration or deformation, a duration of vibration or deformation, a frequency of vibration or deformation, a coefficient of friction for an electrostatic friction effect or ultrasonic friction effect, or a temperature.

10. The method of any one of the preceding claims, wherein the type of device on which the immersive reality module is being executed is one of a game console, a mobile phone, a tablet computer, a laptop, a desktop computer, a server, or a standalone a head-mounted display (HMD).

11. The method of claim 10, wherein the type of the device on which the immersive reality module is being executed is determined to be a second type of device, and wherein the step of controlling the haptic output device to generate the haptic effect comprises retrieving a defined haptic effect characteristic associated with a first type of device for executing any immersive reality module, and modifying the defined haptic effect characteristic to generate a modified haptic effect characteristic, wherein the haptic effect is generated with the modified haptic effect characteristic.

12. The method of any one of the preceding claims, further comprising determining, by the processing circuit, whether a user who is interacting with the immersive reality environment is holding a haptic-enabled handheld controller configured to provide electronic signal input for the immersive reality environment, wherein the haptic effect generated on the haptic-enabled wearable device is based on whether the user is holding a haptic-enabled handheld controller.

13. The method of any one of the preceding claims, wherein the haptic effect is further based on what software other than the immersive reality module is being executed or is installed on the device.

14. The method of any one of the preceding claims, wherein the haptic effect is further based on a haptic capability of the haptic output device of the haptic-enabled wearable device, and wherein, optionally, the haptic output device is a second type of haptic output device, and controlling the haptic output device comprises retrieving a defined haptic effect characteristic associated with a first type of haptic output device, and modifying the defined haptic effect characteristic to generate a modified haptic effect characteristic, wherein the haptic effect is generated based on the modified haptic effect characteristic.

15. A system, comprising:
an immersive reality generating device having
a memory configured to store an immersive reality module for generating an immersive reality environment,
a processing unit configured to execute the immersive reality module, and
a communication interface for performing wireless communication, wherein the immersive reality generating device has no haptic output device and no haptic generation capability; and
a haptic-enabled wearable device having
a haptic output device,
a communication interface configured to wirelessly communicate with the communication interface of the immersive reality generating device,
wherein the haptic-enabled wearable device is configured to receive, from the immersive reality generating device, an indication that a haptic effect is to be generated, and to control the haptic output device to generate the haptic effect.
